# EUROPÄISCHE PATENTSCHRIFT

(11) **EP 1 412 875 B1**
(45) Veröffentlichungstag und Bekanntmachung des Hinweises auf die Patenterteilung: **29.06.2005**
(21) Anmeldenummer: 01997747.9
(22) Anmeldetag: 16.11.2001
(51) Int. Cl.: G06F 17/30

(54) **VERFAHREN ZUR VERARBEITUNG VON TEXT IN EINER RECHNEREINHEIT UND RECHNEREINHEIT**
METHOD FOR PROCESSING TEXT IN A COMPUTER AND COMPUTER
PROCEDE DE TRAITEMENT DE TEXTE DANS UN ORDINATEUR ET ORDINATEUR

(30) Priorität: 21.11.2000 DE 10057634
(43) Veröffentlichungstag der Anmeldung: 28.04.2004
(73) Patentinhaber: ROBERT BOSCH GMBH, 70442 Stuttgart (DE)
(72) Erfinder: MUELLER, Hans-Georg, 71287 Weissach (DE); KOPCSA, Alexander, A-2340 Moedling (AT); SCHIEBEL, Edgar, A-2511 Pfaffstaetten (AT); WIDHALM, Clemens, A-1160 Wien (AT)
(86) Internationale Anmeldenummer: PCT/DE2001/004308
(87) Internationale Veröffentlichungsnummer: WO 2002/042931

(56) Entgegenhaltungen:
- US-A- 5 819 260
- US-A- 5 905 980
- US-A- 6 098 034
- JONES L P ET AL: "INDEX: The Statistical Basis for an Automatic Conceptual Phrase-Indexing System" JOURNAL OF THE AMERICAN SOCIETY FOR INFORMATION SCIENCE, AMERICAN SOCIETY FOR INFORMATION. WASHINGTON, US, Bd. 41, Nr. 2, 1990, Seiten 87-97, XP002093666 ISSN: 0002-8231

## Beschreibung

### Stand der Technik

Die Erfindung geht von einem Verfahren zur Verarbeitung von Text in einer Rechnereinheit und von einer Rechnereinheit nach der Gattung der unabhängigen Ansprüche aus.

Aus der US 5 819 260 ist bereits ein Verfahren und ein Gerät zur Erkennung von Sätzen in einem Text bekannt. Dabei wird ein zu untersuchender Text in mehrere Textgruppen einander direkt benachbarter Wörter aufgeteilt, wobei diese Textgruppen durch vorgegebene Textteile in Form von Wörtern oder Satzzeichen einer speziellen Textteilliste voneinander getrennt sind. Weiterhin ist eine Liste aus Schlagwörtern vorgesehen, in die diese Textgruppen oder Teile daraus aufgenommen werden, wenn deren Häufigkeit im Text einen vorgegebenen Wert überschreitet.

### Vorteile der Erfindung

Das erfindungsgemäße Verfahren zur Verarbeitung von Text in einer Rechnereinheit und die erfindungsgemäße Rechnereinheit mit den Merkmalen der entsprechenden unabhängigen Ansprüche haben demgegenüber den Vorteil, dass in einem ersten Schritt sämtliche Wortgruppen in den Textgruppen gesucht werden, die eine erste vorgegebene Anzahl von einander unmittelbar benachbarten Wörtern umfassen, dass anschließend diejenigen dieser Wortgruppen in den Textgruppen gelöscht werden, deren Häufigkeit im ersten Text den ersten vorgegebenen Wert überschreitet und die daher in die erste Liste aus Schlagwörtern aufgenommen werden, und dass in einem zweiten Schritt sämtliche Wortgruppen in den verbleibenden Textgruppen gesucht werden, die eine zweite vorgegebene Anzahl von einander unmittelbar benachbarten Wörtern umfassen, wobei die zweite vorgegebene Anzahl von Wörtern kleiner als die erste vorgegebene Anzahl von Wörtern ist. Auf diese Weise lässt sich schnell und effizient ein Maximum an Schlagwortgruppen aus dem untersuchten Text entnehmen, die für den Text charakteristisch sind. Durch eine Begrenzung der vorgegebenen Anzahl von einander unmittelbar benachbarten Wörtern auf einen sinnvollen Wert, z.B. 5, lässt sich der Aufwand für die Suche nach Schlagwortgruppen im Text weiter reduzieren. Wortgruppen mit mehr als fünf einander unmittelbar benachbarten Wörter kommen dabei in der Regel selten vor und eignen sich daher in der Regel nicht für die Charakterisierung von Texten. Durch die Auswertung sämtlicher Wortgruppen mit einer vorgegebenen Anzahl von einander unmittelbar benachbarten Wörtern im Text wird zudem verhindert, dass für den Text charakteristische Schlagwortgruppen mit dieser Anzahl von einander unmittelbar benachbarten Wörtern im Text unentdeckt bleiben.

Durch die in den Unteransprüchen aufgeführten Maßnahmen sind vorteilhafte Weiterbildungen und Verbesserungen des Verfahrens zur Verarbeitung von Text in einer Rechnereinheit und der Rechnereinheit gemäß den unabhängigen Ansprüchen möglich.

Besonders vorteilhaft ist es, dass die zweite vorgegebene Anzahl von Wörtern um Eins kleiner als die erste vorgegebene Anzahl von Wörtern gewählt wird. Auf diese Weise lässt sich auch aus der nach der Löschung der in die erste Liste aus Schlagwörtern aufgenommenen Wortgruppen mit der ersten vorgegebenen Anzahl von einander unmittelbar benachbarten Wörtern aus dem Text ein Maximum an Schlagwortgruppen aus den im Text verbleibenden Wortgruppen entnehmen.

Ein weiterer Vorteil besteht darin, dass mehrere Dokumente zu dem ersten Text zusammengefasst werden, dass eine Wortgruppe nur dann in die erste Liste aus Schlagwörtern aufgenommen wird, wenn ihre Häufigkeit in mindestens einer vorgegebenen Anzahl der Dokumente einen zweiten vorgegebenen Wert überschreitet. Auf diese Weise werden nur solche Wortgruppen in die erste Liste aus Schlagwörtern aufgenommen, die auch für mehrere Dokumente charakteristisch sind. Vorlieben eines Autors für bestimmte Wortgruppen in einem Dokument, die in den übrigen Dokumenten nicht auftauchen und somit für den Gesamttext auch nicht charakteristisch sind, können auf diese Weise ausgeblendet werden, so dass ihre Aufnahme in die erste Liste aus Schlagwörtern verhindert wird.

Ein weiterer Vorteil besteht darin, dass der erste Text um einen zweiten Text mit einer zweiten Liste aus Schlagwörtern erweitert wird und dass eine gemeinsame Liste aus Schlagwörtern gebildet wird, in die eine Wortgruppe aufgenommen wird, wenn sie in der ersten Liste aus Schlagwörtern oder in der zweiten Liste aus Schlagwörtern enthalten ist. Auf diese Weise muß bei einer Hinzunahme des zweiten Textes zum ersten Text nicht noch einmal der sich ergebende Gesamttext nach Schlagwörtern untersucht werden, sondern nur der neu hinzukommende zweite Text. Auf diese Weise kann der Aufwand für die Ermittlung von Schlagwortgruppen bei der Hinzunahme eines zweiten Textes zum ersten Text reduziert werden. Die Suche nach Schlagwortgruppen für den sich aus dem ersten Text und dem zweiten Text ergebenden Gesamttext wird dadurch erheblich beschleunigt. Ein weiterer Vorteil besteht darin, dass die Häufigkeit einer Wortgruppe in der ersten Liste aus Schlagwörtern mit der Häufigkeit derselben Wortgruppe in der zweiten Liste aus Schlagwörtern addiert wird und dass die so gebildete gesamte Häufigkeit dieser Wortgruppe in die gemeinsame Liste aus Schlagwörtern in Zuordnung zu dieser Wortgruppe aufgenommen wird. Auf diese Weise lassen sich Trends in der Verwendung von Schlagwortgruppen in Texten erkennen. Wenn die gesamte Häufigkeit einer Schlagwortgruppe bei der Hinzunahme immer neuer Texte zu einem Gesamttext zunimmt, so ist dies ein Zeichen dafür, dass diese Schlagwortgruppe für die Charakterisierung des Gesamttextes an Bedeutung zunimmt und sich daher auch besonders gut als Suchwortgruppe zur Aufspürung weiterer Dokumente desselben Fach-Gebiets eignet.

Ein weiterer Vorteil besteht darin, dass der erste Text aus einem dritten Text und einem vierten Text gebildet wird, dass die Häufigkeit einer ermittelten Wortgruppe im dritten Text mit der Häufigkeit derselben Wortgruppe im vierten Text addiert wird, um die Häufigkeit dieser Wortgruppe im ersten Text zu ermitteln. Auf diese Weise werden bei der Bildung der ersten Schlagwortliste für den ersten Text auch solche Wortgruppen berücksichtigt, die weder im dritten Text noch im vierten Text die vorgegebene Häufigkeit für die Aufnahme in eine dem dritten Text oder dem vierten Text zugeordnete Schlagwortliste erreichen. Dazu muß jedoch nicht erneut ein Suchvorgang nach den entsprechenden Wortgruppen im dritten Text und im vierten Text durchgeführt werden, sondern es können die bei einem früheren .Suchvorgang nach solchen Wortgruppen, der für den dritten Text und den vierten Text getrennt durchgeführt wurde, ermittelten Häufigkeiten für die gefundenen Wortgruppen verwendet werden.
Ein weiterer Vorteil besteht darin, daß nur solche Wortgruppen für die Aufnahme in die erste Liste aus Schlagwörtern ausgewählt werden, die mit einem Substantiv enden. Auf diese Weise werden nur möglichst sinnvolle Wortgruppen ausgewählt. Wortgruppen, die nicht mit einem Substantiv enden, haben sich als inhaltlich wenig gehaltvoll herausgestellt, vor allem in der deutschen und der englischen Sprache.

### Zeichnung

Ein Ausführungsbeispiel der Erfindung ist in der Zeichnung dargestellt und in der nachfolgenden Beschreibung näher erläutert. Es zeigen
Figur 1 ein Blockschaltbild einer erfindungsgemäßen Rechnereinheit,
Figur 2 einen Ablaufplan für das erfindungsgemäße Verfahren,
Figur 3 einen Ablaufplan für die Auswahl einer Schlagwortgruppe bei einem aus mehreren Dokumenten zusammengesetzten Text und
Figur 4 einen Ablaufplan für die Bildung einer gemeinsamen Liste aus Schlagwörtern.

### Beschreibung des Ausführungsbeispiels

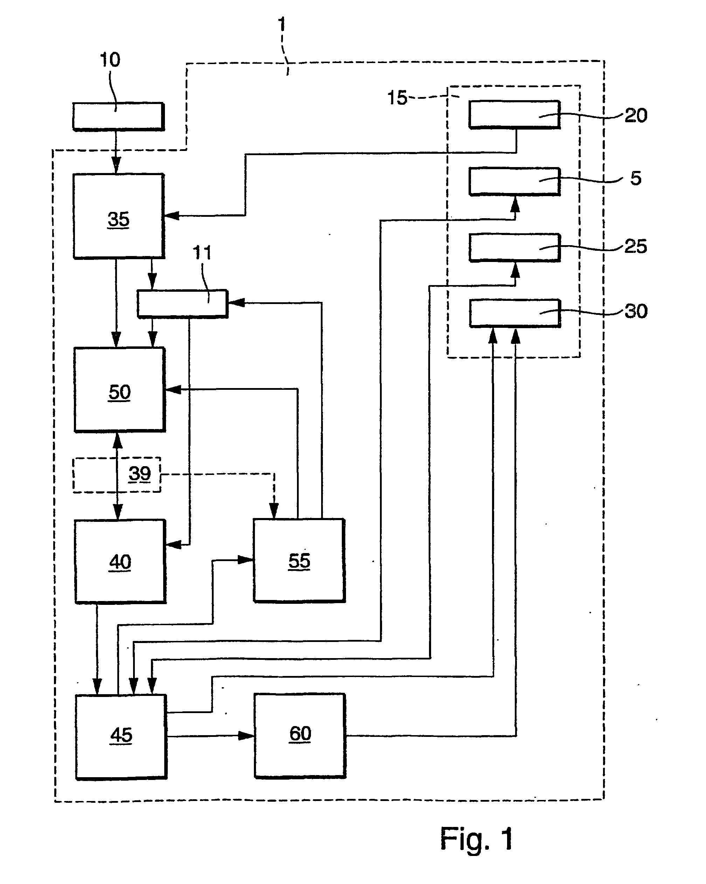

In Figur 1 kennzeichnet 1 eine Rechnereinheit, beispielsweise einen Computer. Die Rechnereinheit 1 umfasst Mittel 35 zur Aufteilung eines ersten Textes 10 in einen aufgeteilten Text 11. Sie werden im Folgenden als Aufteilungsmittel 35 bezeichnet. An die Aufteilungsmittel 35 ist ein Speicher 15 angeschlossen, der wie in Figur 1 dargestellt in der Rechnereinheit 1 angeordnet ist. Der Speicher 15 könnte aber auch außerhalb der Rechnereinheit 1 angeordnet und der Rechnereinheit 1 zugeordnet sein. Die Rechnereinheit 1 umfasst weiterhin eine Suchvorrichtung 50, die im aufgeteilten Text 11 nach Wortgruppen sucht. An die Suchvorrichtung 50 sind Mittel 40 zur Ermittlung der Häufigkeit der von der Suchvorrichtung 50 gefundenen Wortgruppen angeschlossen. An die Mittel 40 zur Ermittlung der Häufigkeit sind Auswahlmittel 45 angeschlossen. Die Auswahlmittel 45 sind mit einer Löschvorrichtung 55 verbunden, die zur Löschung von Wortgruppen im aufgeteilten Text 11 dienen. Die Auswahlmittel 45 selbst dienen zur Auswahl einer Wortgruppe des aufgeteilten Textes 11 für eine erste Liste 5 aus Schlagwörtern, im Folgenden erste Schlagwortliste 5 genannt. Die erste Schlagwortliste 5 ist dabei im Speicher 15 abgelegt. Im Speicher 15 können dabei Schlagwortlisten für mehrere Texte abgelegt sein, so z.B. wie in Figur 1 dargestellt eine zweite Schlagwortliste 25, für die die Auswahlmittel 45 Wortgruppen aus einem zweiten Text auswählen kann. Für die Zusammenfassung mehrerer Texte ist im Speicher 15 eine gemeinsame Schlagwortliste 30 vorgesehen, für die ebenfalls die Auswahlmittel 45 Wortgruppen des sich ergebenden Gesamttextes auswählen. An die Auswahlmittel 45 sind Additionsmittel 60 angeschlossen, die Häufigkeiten gleicher Wortgruppen in verschiedenen Schlagwortlisten zusammenzufassender Texte addieren und ebenfalls in der gemeinsamen Schlagwortliste 30 in Zuordnung zu der jeweils entsprechenden Wortgruppe ablegen. Sämtliche Schlagwortlisten 5, 25, 30 sind im Speicher 15 gespeichert. Im Speicher 15 ist auch eine Textteilliste 20 gespeichert, die vorgegebene Textteile umfasst, mittels derer die Aufteilungsmittel 35 den in diesem Beispiel aufgeführten ersten Text 10 aufteilen.

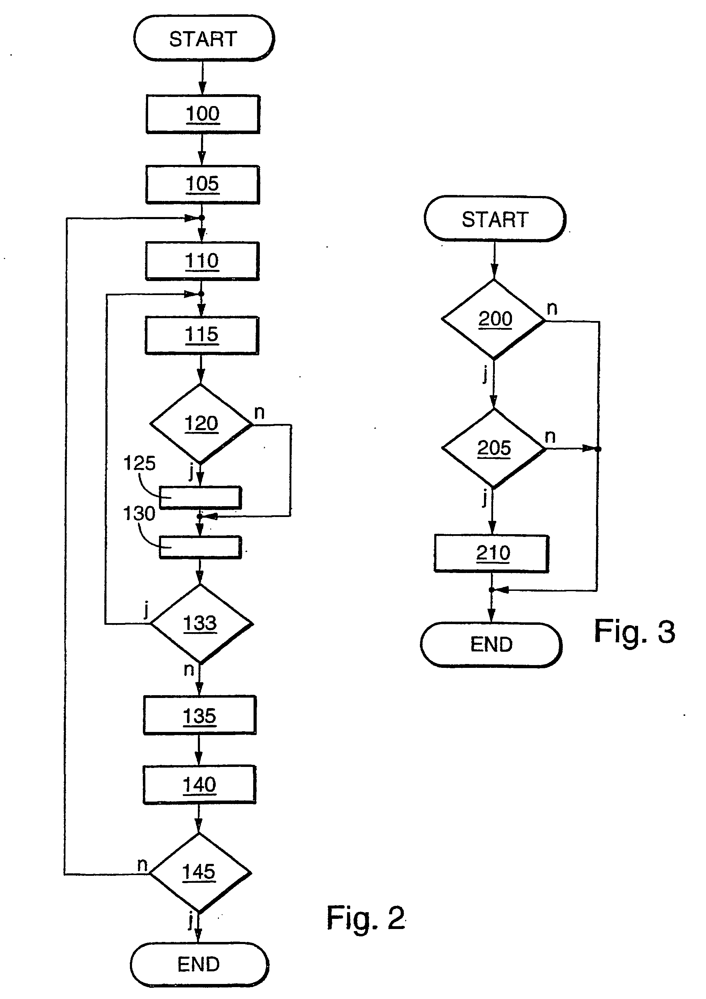

Zunächst wird das erfindungsgemäße Verfahren für die Bildung von Schlagwortgruppen für den ersten Text 10 anhand des Ablaufplans gemäß Figur 2 beschrieben. Bei einem Programmpunkt 100 wird der erste Text 10 den Aufteilungsmitteln 35 zugeführt. Die Aufteilungsmittel 35 suchen den ersten Text 10 nach den in der Textteilliste 20 gespeicherten vorgegebenen Textteilen ab. Bei diesen Textteilen handelt es sich um Satzzeichen und inhaltlich bedeutungslose Worte, wie beispielsweise Artikel, Verknüpfungsworte wie "und" und "oder" und dergleichen mehr. Diese vorgegebenen Textteile werden im ersten Text 10 von den Aufteilungsmitteln 35 detektiert und durch Trennzeichen, beispielsweise Rautenzeichen ersetzt. Auf diese Weise ergibt sich der aufgeteilte Text 11, bei dem durch die genannten Trennungszeichen voneinander getrennte Textgruppen vorliegen. Anschließend wird zu einem Programmpunkt 105 verzweigt.

Bei Programmpunkt 105 wird eine erste Anzahl n einander unmittelbar benachbarter Wörter durch die Suchvorrichtung 50 vorgegeben, beispielsweise n = 5. Anschließend wird zu einem Programmpunkt 110 verzweigt.

Bei Programmpunkt 110 werden die im aufgeteilten Text 11 verbliebenen Textgruppen nach sämtlichen Wortgruppen von der Suchvorrichtung 50 abgesucht, die aus genau n einander unmittelbar benachbarten Wörtern bestehen, das heißt Wörtern, die nicht durch Trennungszeichen voneinander getrennt sind. Die ermittelten Wortgruppen werden zwischengespeichert, beispielsweise ebenfalls im Speicher 15 oder wie in diesem Ausführungsbeispiel angenommen in der Suchvorrichtung 50 selbst. Anschließend wird zu einem Programmpunkt 115 verzweigt.

Bei Programmpunkt 115 ermitteln die Mittel 40 zur Ermittlung der Häufigkeit die Häufigkeit des Auftretens einer der in der Suchvorrichtung 50 zwischengespeicherten Wortgruppen mit n einander unmittelbar benachbarten Wörtern im aufgeteilten Text 11. Zusätzlich kann es vorgesehen sein, daß den Mitteln 40 zur Ermittlung der Häufigkeit Mittel 39 zur Detektion eines Substantivs vorgeschaltet sind, wie in Figur 1 gestrichelt angedeutet. Die Mittel 39 zur Detektion eines Substantivs prüfen dabei bei Programmpunkt 115 vor Ermittlung der Häufigkeit, ob das jeweils letzte Wort der in der Suchvorrichtung 50 zwischengespeicherten Wortgruppen ein Substantiv ist. Die Wortgruppen, die mit einem Substantiv enden, werden anschließend wie beschrieben der Ermittlung der Häufigkeit unterzogen. Die übrigen Wortgruppen werden aus dem Zwischenspeicher der Suchvorrichtung 50 und aus dem aufgeteilten Text 11 durch die Löschvorrichtung 55 gelöscht, wozu die Mittel 39 zur Detektion eines Substantivs wie in Figur 1 ebenfalls gestrichelt dargestellt für diese Option mit der Löschvorrichtung 55 verbunden sind.

Für das Erkennen eines Substantivs im letzten Wort einer Wortgruppe kann dieses bei einem deutschsprachigen Text danach untersucht werden, ob es mit einem Großbuchstaben beginnt. Wenn dies der Fall ist, handelt es sich mit großer Wahrscheinlichkeit um ein Substantiv. Wenn das Wort nicht mit einem Großbuchstaben beginnt, handelt es sich mit Sicherheit nicht um ein Substantiv, Orthografiefehler außer Betracht gelassen.

Alternativ kann mittels eines lexikografischen Verfahrens geprüft werden, ob das Wort als Substantiv - positive Auswahl - oder als Adjektiv, Adverb oder als Verb - negative Auswahl - in einem Lexikon gelistet ist. Dazu kann die Rechnereinheit 1 in ihrem Speicher 15 einen Lexikonspeicher umfassen. Negative Auswahl bedeutet: Das Wort ist dann ein Substantiv, wenn es nicht mit den Einträgen eines Lexikonspeichers übereinstimmt, welche Adjektive, Adverbien und Verben umfassen. Bei positiver Auswahl gilt: Wenn das zu untersuchende Wort mit einem als Substantiv gekennzeichneten Eintrag des Lexikonspeichers übereinstimmt anlässlich eines Vergleichs des zu untersuchenden Wortes mit den Einträgen des Lexikonspeichers, dann wird es als Substantiv detektiert.

Dieses Verfahren ist zwar etwas aufwendiger, ist aber je präziser und weniger fehlerbehaftet, je größer die Zahl der im Lexikonspeicher gelisteten Substantive ist und eignet sich nicht nur für deutschsprachige Texte, sondern vor allem auch für Texte in den Sprachen, in denen sich Substantive in ihrer Form nicht von übrigen Worten unterscheiden, also beispielsweise nicht durch Großbuchstaben am Wortbeginn.

Der Lexikonspeicher sollte ggfs., d.h. in Abhängigkeit der verwendeten Sprache, auch alle möglichen Deklinationsformen der Substantive umfassen, um ein zu untersuchendes Wort unabhängig von seiner Deklinationsform erkennen zu können. Eine andere Möglichkeit besteht darin, das zu untersuchende Wort auf seinen Wortstamm zu reduzieren, beispielsweise durch Lemmatisierung, wie sie beispielsweise aus der Veröffentlichung ,Development of a stemming algorithm' von Lovins, B.J., Mechanical Translation and Computional Linguistics, 11, 22-31 (1968), bekannt ist.

Die Einträge des Lexikonspeichers sollten dann ebenfalls auf ihren Wortstamm reduziert vorliegen, der für alle möglichen Deklinationsformen im Falle von Substantiven gleich ist. In diesem Fall wird der Wortstamm des zu untersuchende Wortes mit den Wortstämmen des Lexikonspeichers verglichen und als Substantiv detektiert, wenn er mit einem als Substantiv gekennzeichneten Wortstamm des Lexikonspeichers übereinstimmt.

Der Wortstamm des Wortes "Krankenhäuser" ist beispielsweise "Krankenhaus" und entspricht in diesem Fall auch der Grundform dieses Wortes. In der Regel ist aber die Buchstabenzahl des Wortstamms eines Wortes kleiner als die Buchstabenzahl der Grundform des Wortes. Bei negativer Auswahl gelten die Ausführungen entsprechend.

Bei Verwendung eines lexikografischen Verfahrens auf der Basis des Wortstammes kann Speicherplatz im Lexikonspeicher gespart werden, da auf ein Speichern sämtlicher Deklinationsformen, soweit in der verwendeten Sprache existent, verzichtet werden kann.
Anschließend wird zu einem Programmpunkt 120 verzweigt. Bei Programmpunkt 120 prüfen die Auswahlmittel 45, ob die ermittelte Häufigkeit der jeweiligen Wortgruppe über einem ersten vorgegebenen Wert liegt. Ist dies der Fall, so wird zu einem Programmpunkt 125 verzweigt, andernfalls wird zu einem Programmpunkt 130 verzweigt.

Bei Programmpunkt 125 wird die entsprechende Wortgruppe in die erste Schlagwortliste 5 im Speicher 15 aufgenommen und bildet somit eine den ersten Text 10 charakterisierende Schlagwortgruppe. Anschließend wird zu Programmpunkt 130 verzweigt.

Bei Programmpunkt 130 veranlassen die Auswahlmittel 45 die Löschvorrichtung 55 zum Löschen der zuletzt untersuchten Wortgruppe aus dem Zwischenspeicher der Suchvorrichtung 50, wozu die Suchvorrichtung 50 mit der Löschvorrichtung 55 verbunden ist, wie in Figur 1 dargestellt. Anschließend wird zu einem Programmpunkt 133 verzweigt.

Bei Programmpunkt 133 prüfen die Mittel 40 zur Ermittlung der Häufigkeit, ob im Zwischenspeicher der Suchvorrichtung 50 eine weitere Wortgruppe gespeichert ist. Ist dies der Fall, dann wird zu Programmpunkt 115 zurück verzweigt und das Programm von Programmpunkt 115 an mit der jeweils neuen aus dem Zwischenspeicher der Suchvorrichtung 50 entnommenen Wortgruppe erneut durchlaufen, andernfalls wird zu einem Programmpunkt 135 verzweigt.

Bei Programmpunkt 135 veranlassen die Auswahlmittel 45 die Löschvorrichtung 55 dazu, sämtliche in die erste Schlagwortliste 5 aufgenommene Wortgruppen aus dem aufgeteilten Text 11 zu löschen. Anschließend wird zu einem Programmpunkt 140 verzweigt.

Bei Programmpunkt 140 wird die erste vorgegebene Anzahl einander unmittelbar benachbarter Wörter in der Suchvorrichtung 50 um Eins dekrementiert, so dass sich eine zweite vorgegebene Anzahl von einander unmittelbar benachbarten Wörtern ergibt, die um Eins kleiner als die erste vorgegebene Anzahl von Wörtern ist. Es könnte natürlich beispielsweise auch eine Dekrementierung um mehr als Eins erfolgen. Im Folgenden soll jedoch eine Dekrementierung der ersten vorgegebenen Anzahl von einander unmittelbar benachbarten Wörtern um Eins angenommen werden. Anschließend wird zu einem Programmpunkt 145 verzweigt.

Bei Programmpunkt 145 prüft die Suchvorrichtung 50, ob die zweite vorgegebene Anzahl kleiner oder gleich Null ist. Ist dies der Fall, so wird das Programm verlassen und die erste Schlagwortliste 5 ist vollständig. Andernfalls wird zu Programmpunkt 110 zurück verzweigt und das Programm von Programmpunkt 110 an erneut durchlaufen, jedoch für Wortgruppen, die aus genau der zweiten vorgegebenen Anzahl von einander unmittelbar benachbarten Wörtern bestehen. Das Programm wird dabei so lange wiederholt von Programmpunkt 110 an mit einer bei Programmpunkt 140 dekrementierten Anzahl von einander unmittelbar benachbarten Wörtern für die zu suchenden Wortgruppen im aufgeteilten Text 11 durchlaufen, bis es über die Ja-Verzweigung bei Programmpunkt 145, d.h. der erfüllten Bedingung n kleiner oder gleich Null verlassen wird.

Es kann vorgesehen sein, mit dem Schlagwort bzw. mit der Schlagwortgruppe auch die zugehörige ermittelte Häufigkeit im Speicher 15 bzw. in der ersten Schlagwortliste 5 in Zuordnung zum zugehörigen Schlagwort bzw. zur zugehörigen Schlagwortgruppe abzuspeichern. Dies stellt jedoch lediglich eine Option dar.

Die Koordination des Programmablaufs kann durch eine in Figur 1 nicht dargestellte Steuerung der Rechnereinheit 1 realisiert werden, die mit dem Speicher 15, mit den Aufteilungsmitteln 35, der Suchvorrichtung 50, den Mitteln 40 zur Ermittlung der Häufigkeit, der Löschvorrichtung 55, den Auswahlmitteln 45 und den Additionsmitteln 60 verbunden ist.

Die Additionsmittel 60 sind nur optional erforderlich.

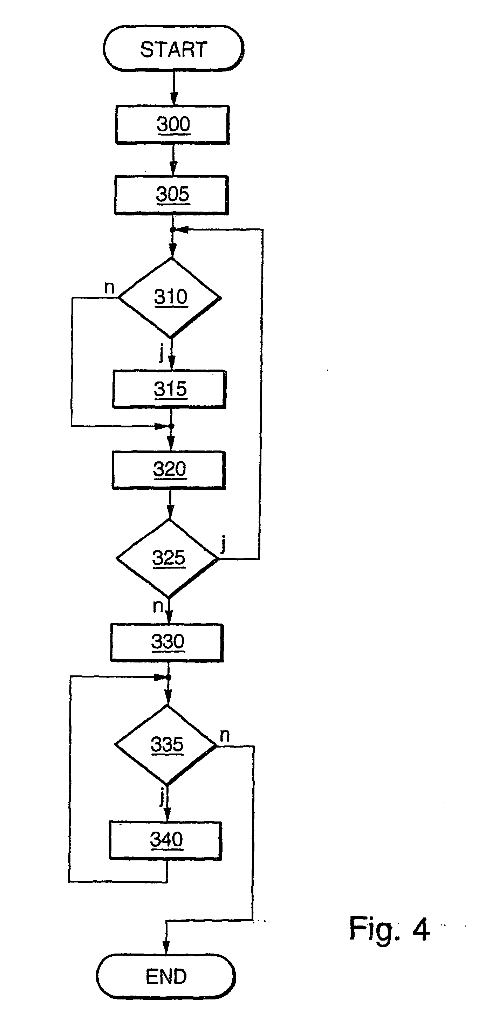

Es kann nun vorgesehen sein, dass der erste Text 10 mehrere Dokumente umfasst. Für diesen Fall werden die Programmpunkte 120 und 125 gemäß Figur 2 durch den Ablauf gemäß Figur 3 ersetzt. Dabei wird bei einem Programmpunkt 200 von den Mitteln 40 zur Ermittlung der Häufigkeit geprüft, ob die Häufigkeit der gerade untersuchten Wortgruppe in mindestens einer vorgegebenen Anzahl der Dokumente im aufgeteilten Text 11 einen zweiten vorgegebenen Wert überschreitet. Ist dies der Fall, so wird zu einem Programmpunkt 205 verzweigt, andernfalls wird das Programm gemäß Figur 3 verlassen und zu Programmpunkt 130 gemäß Figur 2 weiter verzweigt. Der Programmpunkt 205 entspricht dann dem Programmpunkt 120 gemäß Figur 2, d.h. die Mittel 40 zur Ermittlung der Häufigkeit prüfen, ob die gerade untersuchte Wortgruppe im Gesamttext mit einer Häufigkeit vorkommt, die größer als der erste vorgegebene Wert ist. Ist dies der Fall, so wird zu einem Programmpunkt 210 verzweigt, andernfalls wird das Programm gemäß Figur 3 verlassen und zu Programmpunkt 130 gemäß Figur 2 weiter verzweigt. Programmpunkt 210 gemäß Figur 3 entspricht dann wiederum Programmpunkt 125 gemäß Figur 2, bei dem die Auswahlmittel 45 die gerade ausgewählte Wortrgruppe in die erste Schlagwortliste 5 aufnehmen. Anschließend wird das Programm gemäß Figur 3 verlassen und zu Programmpunkt 130 gemäß Figur 2 weiter verzweigt. Die vorgegebene Anzahl der Dokumente für den Prüfvorgang bei Programmpunkt 200 wird kleiner oder gleich der Gesamtanzahl der Dokumente im ersten Text 10 gewählt. Der zweite vorgegebene Wert für die Prüfung bei Programmpunkt 200 kann beispielsweise gleich Null gewählt werden. Das bedeutet, dass eine Wortgruppe, die mit einer Häufigkeit im ersten Text 10, also dem Gesamttext vorkommt, die über dem ersten vorgegebenen Wert liegt, nur dann in die erste Schlagwortliste 5 aufgenommen wird, wenn sie auch in der vorgegebenen Anzahl der Dokumente mindestens einmal vorkommt. Der zweite vorgegebene Wert kann dabei auch größer als Null gewählt werden. Auf diese Weise wird verhindert, dass eine Wortgruppe nur deshalb in die erste Schlagwortliste 5 aufgenommen wird, weil sie vom Autor eines der Dokumente mit Vorliebe benutzt wird, nicht jedoch in den anderen Dokumenten, und daher für den Gesamttext, also den ersten Text 10 insgesamt nicht repräsentativ bzw. charakteristisch ist.

Im Folgenden wird beschrieben, wie die erste Schlagwortliste 5 angepasst werden kann, wenn dem ersten Text 10 ein zweiter Text hinzugefügt wird, nachdem die erste Schlagwortliste 5 bereits vollständig gebildet worden war. Es geht also um die Aktualisierung der ersten Schlagwortliste 5. Für diesen Fall ist in Figur 4 ein Ablaufplan dargestellt. Bevor das Programm zur Aktualisierung der ersten Schlagwortliste 5 gemäß Figur 4 durchlaufen werden kann, muß für den zweiten Text eine zweite Schlagwortliste 25 gebildet werden, die ebenfalls im Speicher 15 abgelegt sein kann, wie Figur 1 zeigt. Die Bildung der zweiten Schlagwortliste 25 aus dem zweiten Text kann dabei in der gleichen Weise erfolgen, wie zum ersten Text 10 beschrieben. Die Aktualisierung der ersten Schlagwortliste 5 erfolgt dadurch, dass eine gemeinsame Schlagwortliste 30 gebildet wird, die ebenfalls im Speicher 15 gemäß Figur 1 abgelegt sein kann und Schlagwörter bzw. Schlagwortgruppen umfasst, die für den ersten Text 10 und den zweiten Text charakteristisch bzw. repräsentativ sind. Bei dieser Aktualisierung wird zunächst bei einem Programmpunkt 300 gemäß Figur 4 eine Listennummer m auf 1 gesetzt. Anschließend wird zu einem Programmpunkt 305 verzweigt. Bei Programmpunkt 305 entnehmen die Auswahlmittel 45 aus der Schlagwortliste mit der Listennummer m gleich 1, also aus der ersten Schlagwortliste 5, ein Schlagwort oder eine Schlagwortgruppe. Anschließend wird zu einem Programmpunkt 310 verzweigt. Bei Programmpunkt 310 prüfen die Auswahlmittel 45, ob das aus der ersten Schlagwortliste 5 entnommene Schlagwort auch in der Schlagwortliste mit der um 1 inkrementierten Listennumer, also der zweiten Schlagwortliste 25, enthalten ist. Ist dies der Fall, so wird zu einem Programmpunkt 315 verzweigt, andernfalls wird zu einem Programmpunkt 320 verzweigt.

Bei Programmpunkt 315 veranlassen die Auswahlmittel 45 die Additionsmittel 60 zur Addition der Häufigkeiten des gerade untersuchten Schlagwortes bzw. der gerade untersuchten Schlagwortgruppe aus den beiden Schlagwortlisten 5, 25. Voraussetzung dafür ist das Vorhandensein der Additionsmittel 60 und die Abspeicherung der Häufigkeitswerte in Zuordnung zu dem zugehörigen Schlagwort bzw. zu der zugehörigen Schlagwortgruppe in der entsprechenden Schlagwortliste bzw. im Speicher 15. Anschließend wird zu Programmpunkt 320 verzweigt.

Bei Programmpunkt 320 wird das gerade untersuchte Schlagwort bzw. die gerade untersuchte Schlagwortgruppe in die gemeinsame Schlagwortliste 30 zusammen mit ihrer Häufigkeit aufgenommen, wobei die Häufigkeit entweder die bei Programmpunkt 315 ermittelte Summen-Häufigkeit ist oder, falls der Programmpunkt 315 übersprungen wurde, die dem Schlagwort bzw. der Schlagwortgruppe in der ersten Schlagwortliste 5 zugeordnete Häufigkeit. Weiterhin wird bei Programmpunkt 320 das gerade untersuchte Schlagwort in der ersten Schlagwortliste 5 markiert und genauso in der zweiten Schlagwortliste 25, falls es auch dort vorhanden ist. Dies wird durch die Auswahlmittel 45 veranlasst. Anschließend wird zu einem Programmpunkt 325 verzweigt.

Bei Programmpunkt 325 prüfen die Auswahlmittel 45, ob in der ersten Schlagwortliste 5 ein Schlagwort oder eine Schlagwortgruppe ohne Markierung vorliegt. Ist dies der Fall, so wird dieses Schlagwort oder diese Schlagwortgruppe ausgewählt und zu Programmpunkt 310 zurückverzweigt. Andernfalls wird zu einem Programmpunkt 330 verzweigt.

Bei Programmpunkt 330 wird die Listennummer m um Eins inkrementiert. Anschließend wird zu einem Programmpunkt 335 verzweigt.

Bei Programmpunkt 335 prüfen die Auswahlmittel 45, ob in der Schlagwortliste mit der um Eins inkrementierten Listennummer, also in diesem Fall in der zweiten Schlagwortliste 25 ein Schlagwort oder eine Schlagwortgruppe ohne Markierung vorliegt. Ist dies der Fall, so wird zu einem Programmpunkt 340 verzweigt, andernfalls wird das Programm verlassen. Bei Programmpunkt 340 veranlassen die Auswahlmittel 45 die Auswahl eines solchen Schlagworts oder einer solchen Schlagwortgruppe ohne Markierung aus der zweiten Schlagwortliste 25 und nehmen sie in die gemeinsame Schlagwortliste 30 mit der zugehörigen und ebenfalls in der zweiten Schlagwortliste 25 bzw. im Speicher 15 gespeicherten Häufigkeit auf. Anschließend wird dieses Schlagwort bzw. diese Schlagwortgruppe in der zweiten Schlagwortliste 25 markiert und zu Programmpunkt 335 zurückverzweigt.

Auf diese Weise lässt sich durch Bildung der gemeinsamen Schlagwortliste 30 in der beschriebenen Art und Weise die erste Schlagwortliste 5 bei Hinzufügen eines zweiten Textes zum ersten Text 10 besonders schnell aktualisieren, da die Schlagwortbildung nicht für den sich durch den ersten Text 10 und den zweiten Text bildenden Gesamttext neu durchgeführt werden muß. Lediglich für den zweiten Text muß vor der Aktualisierung der ersten Schlagwortliste 5 noch die zweite Schlagwortliste 25 gebildet werden.

Auch für den gemäß den Figuren 3 und 4 dargestellten Ablauf kann die Koordination durch die in Figur 1 nicht dargestellte Steuerung der Rechnereinheit 1 durchgeführt werden. Auch bei der gemeinsamen Schlagwortliste 30 ist die den entsprechenden Schlagwörtern bzw. Schlagwortgruppen jeweils zugehörige Häufigkeit in Zuordnung zum entsprechenden Schlagwort bzw. zur entsprechenden Schlagwortgruppe im Speicher 15 bzw. in der gemeinsamen Schlagwortliste 30 gespeichert. Durch das gemäß Figur 4 beschriebene Verfahren stellt dabei die Häufigkeit eines Schlagworts oder einer Schlagwortgruppe in der gemeinsamen Schlagwortliste 30 immer die Summe der Häufigkeiten dieses Schlagworts oder dieser Schlagwortgruppe der ersten Schlagwortliste 5 und der zweiten Schlagwortliste 25 dar.

Das Löschen von Wortgruppen im aufgeteilten Text 11 durch die Löschvorrichtung 55 kann dadurch erfolgen, dass diese Wortgruppen ebenfalls durch ein oder mehrere Trennzeichen ersetzt werden. Das Ersetzen der durch die Textteilliste vorgegebenen Textteile mittels Trennzeichen kann ebenfalls dadurch erfolgen, dass solche Textteile mit mehr als einem Zeichen durch ein oder mehrere Trennzeichen für die Aufteilung des zu untersuchenden Textes zur Bildung des entsprechend aufgeteilten Textes ersetzt werden.

Durch das beschriebene Verfahren werden längere Wortgruppen mit höherer Priorität in die entsprechende Schlagwortliste aufgenommen als kürzere.

Es kann vorgesehen sein, den ersten vorgegebenen Wert und die erste vorgegebene Anzahl von einander unmittelbar benachbarten Wörtern in der Rechnereinheit 1 fest abzuspeichern oder durch eine in Figur 1 nicht dargestellte Eingabeeinheit von einem Benutzer eingeben zu lassen. Dasselbe gilt für die Dekrementierungsschrittweite für die vorgegebene Anzahl von einander unmittelbar benachbarten Wörtern. Die bei Programmpunkt 200 gemäß Figur 3 zu prüfende vorgegebene Anzahl der Dokumente sowie der zweite vorgegebene Wert können entweder fest in der Rechnereinheit: 1 abgelegt oder an der Eingabeeinheit vom Benutzer eingegeben werden.

Wenn die für den Ablauf des erfindungsgemäßen Verfahrens nach Figur 2, Figur 3 und Figur 4 vorzugebenden Parameter wie beschrieben an einer Eingabeeinheit der Rechnereinheit 1 eingegeben werden können, so können für verschiedene Texte, für die jeweils eine Schlagwortliste zu bilden ist, auch verschiedene Werte für diese Parameter vorgegeben werden. Es kann auch vorgesehen sein, für einen einzigen Text mehrere Schlagwortlisten anzulegen, für die unterschiedliche Werte für die vorzugebenden Parameter gewählt werden, beispielsweise eine unterschiedliche Vorgabe für den ersten vorgegebenen Wert. Wird dieser nach Bildung einer ersten Schlagwortliste für diesen Text herabgesetzt, so kann für diesen Text eine zweite Schlagwortliste erstellt werden, die seltenere Schlagwörter oder Schlagwortgruppen umfasst, indem der erste vorgegebene Wert erhöht wird. Die zu untersuchenden Texte können beispielsweise als ASCII-Files oder als HTML-Seiten des Internets vorliegen.

Es kann vorgesehen sein, die Schlagwortlisten 5, 25, 30 des Speichers 15 an einer in Figur 1 nicht dargestellten optischen und/oder akustischen Wiedergabevorrichtung wiederzugeben. Die gebildeten Schlagwortlisten können beispielsweise dazu genutzt werden, neue Texte zu suchen, die auf dem gleichen Fachgebiet liegen, wie der bereits untersuchte erste Text 10 und für den daher dieselben Schlagwörter oder Schlagwortgruppen repräsentativ sind. Solche Schlagwortlisten können daher beispielsweise bei Patentrecherchen eingesetzt werden. Auch können die Schlagwörter oder Schlagwortgruppen aus dem Speicher 15 direkt für eine solche Recherche genutzt werden, wozu die Rechnereinheit 1 beispielsweise an das Internet angeschlossen sein kann. Eine Eingabe der Schlagwörter oder Schlagwortgruppen durch den Benutzer kann auf diese Weise entfallen. Es kann vorgesehen sein, dass er die ihm an der Wiedergabevorrichtung angebotenen Schlagwörter oder Schlagwortgruppen menügesteuert, beispielsweise durch einen Mauszeiger oder mittels Cursorsteuerung auswählt und mittels einer Bestätigungstaste für die Suche weiterer Texte bestätigt, für die die Schlagwörter oder Schlagwortgruppen aus der gespeicherten oder den gespeicherten Schlagwortlisten 5, 25, 30 charakteristisch sind.

Die Schlagwortlisten im Speicher 15 können in Zuordnung zu einer Kennzeichnung im Speicher 15 abgelegt sein, die den zugehörigen Text kennzeichnet. Auf diese Weise kann auch die Wiedergabe der Schlagwortgruppen in Zuordnung zu dem zugehörigen Text erfolgen. Somit ist für den Benutzer an der Wiedergabevorrichtung wahrnehmbar, zu welchem Text die gerade wiedergegebene Schlagwortliste gehört. Durch die Aktualisierung der ersten Schlagwortliste 5 mittels der gemeinsamen Schlagwortliste 30 gemäß dem Ausführungsbeispiel nach Figur 4 ist es möglich, Trends in der Charakterisierung von Texten, die zu einem Fachgebiet gehören, zu erkennen und zu verfolgen, indem beispielsweise Neuzugänge in der gemeinsamen Schlagwortliste 30 ermittelt werden oder Schlagwörter oder Schlagwortgruppen in der gemeinsamen Schlagwortliste 30 ermittelt werden, deren Häufigkeit bei der Hinzufügung neuer Texte derart ansteigt, dass der Anstieg über einem vorgegebenen Wert liegt. Bei der Aktualisierung der ersten Schlagwortliste 5 durch die beschriebene Bildung der gemeinsamen Schlagwortliste 30 wird sichergestellt, dass einmal gefundene Schlagwörter oder Schlagwortgruppen in der ersten Schlagwortliste 5 oder der zweiten Schlagwortliste 25 erhalten bleiben und in der gemeinsamen Schlagwortliste 30 abgelegt werden.

Eine weitere Anwendung besteht darin, an einer Anzeigevorrichtung der Rechnereinheit einen Text wiederzugeben und Schlagwörter oder Schlagwortgruppen der zugehörigen Schlagwortliste in diesem Text farbig zu markieren, wobei der Benutzer zuvor einzelne oder alle Schlagwörter oder Schlagwortgruppen dieser Schlagwortliste zur farbigen Markierung an der Eingabeeinheit der Rechnereinheit 1 auswählen kann.

Es kann weiterhin vorgesehen sein, dass die durch die Mittel 40 zur Ermittlung der Häufigkeit ermittelten Häufigkeitswerte für die durch die Suchvorrichtung 50 ermittelten Wortgruppen aus dem aufgeteilten Text 11 in Form einer Häufigkeitstabelle im Speicher 15 oder in den Mitteln 40 zur Ermittlung der Häufigkeit oder in der Suchvorrichtung 50 selbst gespeichert werden und zwar in Zuordnung zur entsprechenden Wortgruppe.

Es kann weiterhin alternativ vorgesehen sein, dass der erste Text 10 aus einem dritten Text und einem vierten Text gebildet ist, wobei für den dritten Text und den vierten Text in der beschriebenen Weise jeweils eine Häufigkeitstabelle für die durch die Suchvorrichtung 50 ermittelten Wortgruppen in den Mitteln 40 zur Ermittlung der Häufigkeit oder in der Suchvorrichtung 50 abgelegt wurde. Dabei soll beispielhaft angenommen werden, dass die Häufigkeitstabelle für den dritten Text früher gebildet wurde als die Häufigkeitstabelle für den vierten Text und dass die erste Schlagwortliste 5 für den dritten Text erstellt wurde. Es soll nun die gemeinsame Schlagwortliste 30 für den den dritten Text und den vierten Text umfassenden ersten Text 10 ermittelt werden. Dies geschieht nun dadurch, dass die beiden Häufigkeitstabellen additiv überlagert werden zu einer gemeinsamen Häufigkeitstabelle, die ebenfalls im Speicher 15 oder in den Mitteln 40 zur Ermittlung der Häufigkeit abgelegt sein kann. Dabei werden die Häufigkeiten von Wortgruppen miteinander addiert, wenn die Wortgruppen sowohl in der dem dritten Text zugeordneten ersten Häufigkeitstabelle als auch in der dem vierten Text zugeordneten zweiten Häufigkeitstabelle aufgeführt sind, und die Summenhäufigkeit wird in der gemeinsamen Häufigkeitstabelle jeweils der entsprechenden Wortgruppe zugeordnet. Die jeweilige Häufigkeit der Wortgruppen, die nur in der ersten Häufigkeitstabelle oder nur in der zweiten Häufigkeitstabelle abgelegt sind, werden unverändert in die gemeinsame Häufigkeitstabelle in Zuordnung zur entsprechenden Wortgruppe übernommen. Die gemeinsame Schlagwortliste 30 wird dann in der gemäß den Figuren 2 oder 3 beschriebenen Weise ausgehend von der gemeinsamen Häufigkeitstabelle für den ersten Text 10 gebildet. Der Vorteil gegenüber der gemäß Figur 4 beschriebenen Ausführungsform besteht darin, dass bei Verwendung der gemeinsamen Häufigkeitstabelle auch solche Wortgruppen in die gemeinsame Schlagwortliste 30 aufgenommen werden können, die nur durch Zusammenschau des dritten Textes und des vierten Textes die für die Aufnahme in die gemeinsame Schlagwortliste 30 erforderliche Häufigkeit erbringen, deren Häufigkeit im dritten und im vierten Text jeweils einzeln, jedoch unter der geforderten Häufigkeitsschwelle, also dem ersten vorgegebenen Wert, liegt.

## Patentansprüche

1. Verfahren zur Verarbeitung von Text in einer Rechnereinheit (1), bei dem eine erste Liste (5) aus Schlagwörtern gebildet wird, wobei ein erster Text (10) in mehrere Textgruppen aufgeteilt wird, die durch vorgegebene Textteile einer in einem der Rechnereinheit (1) zugeordneten Speicher (15) abgelegten Textteilliste (20) voneinander getrennt sind, und wobei zumindest ein Teil einer Textgruppe in die erste Liste (5) aus Schlagwörtern aufgenommen wird, dessen Häufigkeit im ersten Text (10) einen ersten vorgegebenen Wert überschreitet, **dadurch gekennzeichnet, dass** in einem ersten Schritt sämtliche Wortgruppen in den Textgruppen gesucht werden, die eine erste vorgegebene Anzahl von einander unmittelbar benachbarten Wörtern umfassen, dass die Wortgruppen in den Textgruppen, deren Häufigkeit im ersten Text den ersten vorgegebenen Wert überschreitet in die erste Liste (5) aus Schlagwörtern aufgenommen werden, und dass diese Wortgruppen gelöscht werden, und dass in einem zweiten Schritt sämtliche Wortgruppen in den Textgruppen gesucht werden, die eine zweite vorgegebene Anzahl von einander unmittelbar benachbarten Wörtern umfassen, wobei die zweite vorgegebene Anzahl von Wörtern kleiner als die erste vorgegebene Anzahl von Wörtern ist.

2. Verfahren nach einem der vorherigen Ansprüche, **dadurch gekennzeichnet, dass** die zweite vorgegebene Anzahl von Wörtern um Eins kleiner als die erste vorgegebene Anzahl von Wörtern gewählt wird.

3. Verfahren nach Anspruch 1 oder 2, **dadurch gekennzeichnet, dass** mehrere Dokumente zu dem ersten Text (10) zusammengefaßt werden und dass eine Wortgruppe nur dann in die erste Liste (5) aus Schlagwörtern aufgenommen wird, wenn ihre Häufigkeit in mindestens einer vorgegebenen Anzahl der Dokumente einen zweiten vorgegebenen Wert überschreitet.

4. Verfahren nach Anspruch 1, 2 oder 3, **dadurch gekennzeichnet, dass** der erste Text (10) um einen zweiten Text mit einer zweiten Liste aus Schlagwörtern (25) erweitert wird und dass eine gemeinsame Liste (30) aus Schlagwörtern gebildet wird, in die eine Wortgruppe aufgenommen wird, wenn sie in der ersten Liste (5) aus Schlagwörtern oder in der zweiten Liste (25) aus Schlagwörtern enthalten ist.

5. Verfahren nach Anspruch 4, **dadurch gekennzeichnet, dass** die Häufigkeit einer Wortgruppe in der ersten Liste (5) aus Schlagwörtern mit der Häufigkeit derselben Wortgruppe in der zweiten Liste (25) aus Schlagwörtern addiert wird und dass die so gebildete gesamte Häufigkeit dieser Wortgruppe in die gemeinsame Liste (30) aus Schlagwörtern in Zuordnung zu dieser Wortgruppe aufgenommen wird.

6. Verfahren nach Anspruch 1, 2 oder 3, **dadurch gekennzeichnet, dass** der erste Text (10) aus einem dritten Text und einem vierten Text gebildet wird, dass die Häufigkeit einer ermittelten Wortgruppe im dritten Text mit der Häufigkeit derselben Wortgruppe im vierten Text addiert wird, um die Häufigkeit dieser Wortgruppe im ersten Text (10) zu ermitteln.

7. Verfahren nach einem der vorherigen Ansprüche, **dadurch gekennzeichnet, daß** nur solche Wortgruppen für die Aufnahme in die erste Liste (5) aus Schlagwörtern ausgewählt werden, die mit einem Substantiv enden.

8. Rechnereinheit (1) zur Durchführung des Verfahrens nach einem der vorherigen Ansprüche, **dadurch gekennzeichnet, dass** Mittel (35) zur Aufteilung eines ersten Textes (10) in mehrere Textgruppen vorgesehen sind, dass die Mittel (35) zur Aufteilung Textteile im ersten Text (10) markiert, die in einem der Rechnereinheit (1) zugeordneten Speicher (15) abgelegt sind, wobei die markierten Textteile die Textgruppen des ersten Textes (10) voneinander trennen, dass Mittel (40) zur Ermittlung der Häufigkeit einer in der Textgruppe enthaltenen Wortgruppe vorgesehen sind, dass Auswahlmittel (45) vorgesehen sind, die die Wortgruppe in eine im Speicher (15) abgelegte erste Liste (5) aus Schlagwörtern aufnimmt, wenn die ermittelte Häufigkeit über einem ersten vorgegebenen Wert liegt, dass eine Suchvorrichtung (50) vorgesehen ist, die sämtliche Wortgruppen, die eine erste vorgegebene Anzahl von einander unmittelbar benachbarten Wörtern umfassen, in den Textgruppen sucht, die diejenigen dieser Wortgruppen in den Textgruppen, deren ermittelte Häufigkeit im ersten Text (10) den ersten vorgegebenen Wert überschreitet, in die erste Liste (5) aus Schlagwörtern aufnimmt, mit einer Löschvorrichtung, die diese Wortgruppen löscht, dass die Suchvorrichtung (50) anschließend sämtliche Wortgruppen in den Textgruppen sucht, die eine zweite vorgegebene Anzahl von einander unmittelbar benachbarten Wörtern umfassen, wobei die zweite vorgegebene Anzahl von Wörtern kleiner als die erste vorgegebene Anzahl von Wörtern ist.

9. Rechnereinheit (1) nach Anspruch 8, **dadurch gekennzeichnet, dass** die zweite vorgegebene Anzahl von Wörtern um Eins kleiner als die erste vorgegebene Anzahl von Wörtern ist.

10. Rechnereinheit (1) nach Anspruch 8 oder 9, **dadurch gekennzeichnet, dass** mehrere Dokumente zu dem ersten Text (10) zusammengefaßt sind und dass die Auswahlmittel (45) eine Wortgruppe nur dann in die erste Liste (5) aus Schlagwörtern aufnehmen, wenn ihre ermittelte Häufigkeit in mindestens einer vorgegebenen Anzahl der Dokumente einen zweiten vorgegebenen Wert überschreitet.

11. Rechnereinheit (1) nach Anspruch 8, 9 oder 10, **dadurch gekennzeichnet, dass** der erste Text (10) um einen zweiten Text mit einer im Speicher (15) abgelegten zweiten Liste (25) aus Schlagwörtern erweitert ist, dass eine gemeinsame Liste (30) aus Schlagwörtern im Speicher (15) vorgesehen ist, dass die Auswahlmittel (45) eine Wortgruppe in die gemeinsame Liste (30) aus Schlagwörtern aufnehmen, wenn sie in der ersten Liste (5) aus Schlagwörtern oder in der zweiten Liste (25) aus Schlagwörtern enthalten ist.

12. Rechnereinheit (1) nach Anspruch 11, **dadurch gekennzeichnet, dass** Additionsmittel (60) vorgesehen sind, die die Häufigkeit einer Wortgruppe in der ersten Liste (5) aus Schlagwörtern mit der Häufigkeit derselben Wortgruppe in der zweiten Liste (25) aus Schlagwörtern addieren und dass die so gebildete gesamte Häufigkeit dieser Wortgruppe in der gemeinsamen Liste (30) aus Schlagwörtern in Zuordnung zu dieser Wortgruppe im Speicher (15) abgelegt ist.

13. Rechnereinheit (1) nach Anspruch 8, 9 oder 10, **dadurch gekennzeichnet, dass** der erste Text (10) aus einem dritten Text und einem vierten Text gebildet ist, dass die Mittel (40) zur Ermittlung der Häufigkeit eine erste Häufigkeitstabelle für sämtliche ermittelten Wortgruppen des dritten Textes und eine Häufigkeitstabelle für sämtliche ermittelten Wortgruppen des vierten Textes bilden, in denen jeder Wortgruppe die Häufigkeit zugeordnet ist, mit der sie im entsprechenden Text auftritt, dass die Mittel (40) zur Ermittlung der Häufigkeit die Häufigkeit einer Wortgruppe in der ersten Häufigkeitstabelle mit der Häufigkeit derselben Wortgruppe in der zweiten Häufigkeitstabelle addiert, um die Häufigkeit dieser Wortgruppe im ersten Text (10) zu ermitteln.

14. Rechnereinheit (1) nach einem der Ansprüche 8 bis 13, **dadurch gekennzeichnet, daß** die Auswahlmittel (45) eine Wortgruppe nur dann in die erste Liste (5) aus Schlagwörtern aufnehmen, wenn sie mit einem Substantiv endet.

## Claims

1. Method for processing text in a computer unit (1), in which a first list (5) of headwords is formed, where a first text (10) is split into a plurality of text groups which are separated from one another by prescribed text components from a text component list (20) which is stored in a memory (15) associated with the computer unit (1), and where at least one component from a text group is incorporated into the first list (5) of headwords, the frequency of said component in the first text (10) exceeding a first prescribed value, **characterized in that** in a first step all word groups in the text groups are sought which comprise a first prescribed number of words which are directly adjacent to one another, **in that** the word groups in the text groups whose frequency in the first text exceeds the first prescribed value are incorporated into the first list (5) of headwords, and **in that** these word groups are erased, and **in that** in a second step all word groups in the text groups are sought which comprise a second prescribed number of words which are directly adjacent to one another, the second prescribed number of words being smaller than the first prescribed number of words.

2. Method according to the preceding claim,
**characterized in that** the second prescribed number of words is chosen to be one smaller than the first prescribed number of words.

3. Method according to Claim 1 or 2, **characterized in that** a plurality of documents are combined to form the first text (10), and **in that** a word group is incorporated into the first list (5) of headwords only if its frequency in at least one prescribed number of the documents exceeds a second prescribed value.

4. Method according to Claim 1, 2 or 3, **characterized in that** the first text (10) is extended by a second text with a second list of headwords (25), and **in that** a common list (30) of headwords is formed into which a word group is incorporated if it is contained in the first list (5) of headwords or in the second list (25) of headwords.

5. Method according to Claim 4, **characterized in that** the frequency of a word group in the first list (5) of headwords is added to the frequency of the same word group in the second list (25) of headwords, and **in that** the thus formed total frequency of this word group is incorporated into the common list (30) of headwords in association with this word group.

6. Method according to Claim 1, 2 or 3, **characterized in that** the first text (10) is formed from a third text and a fourth text, **in that** the frequency of an ascertained word group in the third text is added to the frequency of the same word group in the fourth text in order to ascertain the frequency of this word group in the first text (10).

7. Method according to one of the preceding claims, **characterized in that** only word groups which end with a noun are selected for incorporation into the first list (5) of headwords.

8. Computer unit (1) for carrying out the method according to one of the preceding claims, **characterized in that** means (35) for splitting a first text (10) into a plurality of text groups are provided, **in that** the splitting means (35) mark text components in the first text (10) which are stored in a memory (15) associated with the computer unit (1), with the marked text components separating the text groups in the first text (10) from one another, **in that** means (40) for ascertaining the frequency of a word group contained in the text group are provided, **in that** selection means (45) are provided which incorporate the word group into a first list (5) of headwords which is stored in the memory (15) if the ascertained frequency is above a first prescribed value, **in that** a search apparatus (50) is provided which searches for all word groups in the text groups which comprise a first prescribed number of words which are directly adjacent to one another and which incorporates those of these word groups in the text groups whose ascertained frequency in the first text (10) exceeds the first prescribed value into the first list (5) of headwords with an erasure apparatus which erases these word groups, **in that** the search apparatus (50) then searches for all word groups in the text groups which comprise a second prescribed number of words which are directly adjacent to one another, the second prescribed number of words being smaller than the first prescribed number of words.

9. Computer unit (1) according to Claim 8, **characterized in that** the second prescribed number of words is one smaller than the first prescribed number of words.

10. Computer unit (1) according to Claim 8 or 9, **characterized in that** a plurality of documents are combined to form the first text (10), and **in that** the selection means (45) incorporate a word group into the first list (5) of headwords only if its ascertained frequency in at least one prescribed number of the documents exceeds a second prescribed value.

11. Computer unit (1) according to Claim 8, 9 or 10, **characterized in that** the first text (10) is extended by a second text with a second list (25) of headwords which is stored in the memory (15), **in that** a common list (30) of headwords is provided in the memory (15), **in that** the selection means (45) incorporate a word group into the common list (30) of headwords if it is contained in the first list (5) of headwords or in the second list (25) of headwords.

12. Computer unit (1) according to Claim 11, **characterized in that** addition means (60) are provided which add the frequency of a word group in the first list (5) of headwords to the frequency of the same word group in the second list (25) of headwords, and **in that** the thus formed total frequency of this word group is stored in the common list (30) of headwords in association with this word group in the memory (15).

13. Computer unit (1) according to Claim 8, 9 or 10, **characterized in that** the first text (10) is formed from a third text and a fourth text, **in that** the means (40) for ascertaining the frequency from a first frequency table for all ascertained word groups in the third text and a frequency table for all ascertained word groups in the fourth text which contain, for each word group, the associated frequency with which it appears in the corresponding text, **in that** the means (40) for ascertaining the frequency add the frequency of a word group in the first frequency table to the frequency of the same word group in the second frequency table in order to ascertain the frequency of this word group in the first text (10).

14. Computer unit (1) according to one of Claims 8 to 13, **characterized in that** the selection means (45) incorporate a word group into the first list (5) of headwords only if it ends with a noun.

## Revendications

1. Procédé de traitement de texte dans un ordinateur (1) selon lequel on forme une première liste (5) constituée de mots clés, et un premier texte (10) est divisé en plusieurs groupes de textes séparés les uns des autres par des parties de texte prédéfinies d'une liste de parties de textes déposée dans une mémoire (15) associée à l'ordinateur (1), et au moins une partie d'un groupe de textes, dont la fréquence dans le premier texte (10) dépasse une première valeur prédéfinie, est prise en charge dans la première liste (5) constituée de mots-clés,
**caractérisé en ce que**
- dans une première étape sont recherchés dans les groupes de textes, tous les groupes de mots qui comprennent un premier nombre prédéfini de mots directement voisins les uns des autres,
- les groupes de mots appartenant aux groupes de textes et dont la fréquence dans le premier texte dépasse la première valeur prédéfinie sont pris en compte dans la première liste (5) constituée de mots-clés, et ces groupes de mots sont effacés, et
- dans une seconde étape sont recherchés dans les groupes de textes, tous les groupes de mots qui comprennent un seconde nombre prédéfini de mots directement voisins les uns des autres, le second nombre prédéfini de mots étant plus petit que le premier nombre prédéfini de mots.

2. Procédé selon la revendication précédente,
**caractérisé en ce que**
le second nombre prédéfini de mots est choisi inférieur d'une unité au premier nombre prédéfini de mots.

3. Procédé selon la revendication 1 ou 2,
**caractérisé en ce que**
plusieurs documents sont réunis pour former le premier texte (10) et un groupe de mots est pris en compte dans la première liste (5) de mots-clés seulement si sa fréquence, dans au moins un nombre prédéfini de documents, dépasse une seconde valeur prédéfinie.

4. Procédé selon une des revendications précédentes,
**caractérisé en ce que**
le premier texte (10) est augmenté d'un second texte avec une seconde liste de mots-clés (25), et on forme une liste commune (30) constituée de mots-clés dans laquelle est accueilli un groupe de mots si celui-ci se trouve dans la première liste (5) ou dans la seconde liste (25) constituée de mots-clés.

5. Procédé selon la revendication 4,
**caractérisé en ce que**
la fréquence d'un groupe de mots se trouvant dans la première liste (5) de mots-clés et la fréquence de ce même groupe dans la seconde liste (25) de mots-clés sont additionnées, et la fréquence totale ainsi réalisée de ce groupe est prise en compte dans la liste commune (30) de mots-clés en association avec ce groupe de mots.

6. Procédé selon la revendication 1, 2 ou 3,
**caractérisé en ce que**
le premier texte (10) est formé d'un troisième texte et d'un quatrième texte, et la fréquence d'un groupe de mots déterminé dans le troisième texte est ajoutée à la fréquence de ce même groupe de mots dans le quatrième texte, pour déterminer la fréquence de ce groupe de mots dans le premier texte (10).

7. Procédé selon une des revendications précédentes,
**caractérisé en ce que**
pour la prise en compte dans la première liste (5) de mots-clés, sont sélectionnés les seuls groupes de mots qui se terminent par un substantif.

8. Ordinateur (1) pour la mise en oeuvre du procédé selon la revendication précédente,
**caractérisé en ce que**
- des moyens (35) sont prévus pour diviser un premier texte (10) en plusieurs groupes de textes, et ces moyens de division marquent dans un premier texte des parties de texte qui sont déposées dans une mémoire associée à l'ordinateur (1), les parties de texte marquées séparant l'un de l'autre les groupes de textes du premier texte (10),
- des moyens sont prévus pour déterminer la fréquence d'un groupe de mots contenu dans le groupe de textes,
- des moyens de sélection (45) sont prévus pour accueillir le groupe de mots dans une première liste (5) de mots-clés déposée dans une mémoire (15), si la fréquence établie dépasse une première valeur prédéfinie,
- un dispositif de recherche (50) recherche dans les groupes de textes tous les groupes de mots comportant un premier nombre prédéfini de mots, directement voisins les uns des autres, et qui prend en compte dans la première liste (5) de mots-clés ceux de ces groupes de mots se trouvant dans les groupes de textes et dont la fréquence établie dans le premier texte (10) dépasse la première valeur prédéfinie, avec un dispositif d'effacement qui efface ces groupes de mots, et
- le dispositif de recherche (50) cherche ensuite tous les groupes de mots se trouvant dans les groupes de textes et qui comprennent un second nombre prédéfini de mots directement voisins les uns des autres, ce second nombre prédéfini étant inférieur au premier nombre prédéfini de mots.

9. Ordinateur (1) selon la revendication 8,
**caractérisé en ce que**
le second nombre prédéfini de mots est choisi inférieur d'une unité au premier nombre prédéfini de mots.

10. Ordinateur (1) selon la revendication 8 ou 9,
**caractérisé en ce que**
plusieurs documents sont réunis pour former le premier texte (10) et un groupe de mots est pris en compte dans la première liste (5) de mots-clés seulement si sa fréquence, dans au moins un nombre prédéfini de documents, dépasse une seconde valeur prédéfinie.

11. Ordinateur (1) selon la revendication 8, 9 ou 10,
**caractérisé en ce que**
le premier texte (10) est augmenté d'un second texte avec une seconde liste de mots-clés (25) et il est prévu une liste commune (30) constituée de mots-clés dans la mémoire (15), les moyens de sélection (45) accueillant un groupe de mots dans la liste commune (30) de mots-clés, si ce groupe se trouve dans la première liste (5) ou dans la seconde liste (25) constituée de mots-clés.

12. Ordinateur (1) selon la revendication 11,
**caractérisé en ce qu'**
il est prévu des moyens d'addition (60) qui additionnent la fréquence d'un groupe de mots se trouvant dans la première liste (5) de mots-clés et la fréquence de ce même groupe dans la seconde liste (25) de mots-clés, et la fréquence totale ainsi formée de ce groupe est déposée dans la liste commune (30) de mots-clés qui est associée à ce groupe de mots dans la mémoire (15).

13. Ordinateur (1) selon la revendication 8, 9 ou 10,
**caractérisé en ce que**
- le premier texte (10) est composé d'un troisième texte et d'un quatrième texte, et les moyens (40) destinés à déterminer la fréquence, établissent un premier tableau de fréquences pour l'ensemble des groupes de mots déterminés du troisième texte et un tableau de fréquences pour l'ensemble des groupes de mots déterminés du quatrième texte, et dans ces tableaux, à chaque groupe de mots est associée la fréquence avec laquelle il se présente dans le texte correspondant, et
- les moyens (40) destinés à déterminer la fréquence additionnent la fréquence d'un groupe de mots dans le premier tableau de fréquences, et la fréquence de ce même groupe de mots dans le second tableau de fréquences, pour déterminer la fréquence de ce groupe de mots dans le premier texte (10).

14. Ordinateur (1) selon la revendication 8 à 13,
**caractérisé en ce que**
les moyens de sélection (45) prennent en compte, dans la première liste (5) de mots-clés, les seuls groupes de mots qui se terminent par un substantif.
